# EUROPÄISCHE PATENTSCHRIFT

(11) **EP 3 050 661 B1**
(45) Veröffentlichungstag und Bekanntmachung des Hinweises auf die Patenterteilung: **13.04.2022**
(21) Anmeldenummer: 16000050.1
(22) Anmeldetag: 12.01.2016
(51) Int. Cl.: B23F 23/12, B23F 1/02, B23Q 11/00

(54) **VERZAHNUNGS- ODER PROFILSCHLEIFMASCHINE UND VERFAHREN ZUM BETREIBEN EINER SOLCHEN**
TOOTH OR PROFILE GRINDING MACHINE AND METHOD FOR OPERATING SAME
MACHINE DE RECTIFICATION DE DENTS OU DE PROFILES ET SON PROCEDE DE FONCTIONNEMENT

(30) Priorität: 28.01.2015 DE 102015001036
(43) Veröffentlichungstag der Anmeldung: 03.08.2016
(73) Patentinhaber: Kapp Werkzeugmaschinen GmbH, 96450 Coburg (DE); NILES Werkzeugmaschinen GmbH, 12681 Berlin (DE)
(72) Erfinder: Stegner, Achim, 96450 Coburg (DE); Thierfelder, Sven, 96268 Mitwitz (DE); Wellein, Andreas, 96231 Bad Staffelstein (DE)
(74) Vertreter: Gosdin, Michael

(56) Entgegenhaltungen:
- EP-B1- 2 305 409
- DE-A1-102010 028 032
- US-A- 2 208 804
- US-A- 2 696 763

## Beschreibung

Die Erfindung betrifft eine Verzahnungs- oder Profilschleifmaschine, insbesondere zum Schleifen vorverzahnter bzw. vorprofilierter Werkstücke, wobei die Maschine mindestens eine Werkzeugspindel aufweist, auf der mindestens ein Schleifwerkzeug aufgenommen werden kann, und wobei die Maschine mindestens eine Werkstückspindel aufweist, die an einem Trägerelement verschieblich angeordnet ist und die zumindest zeitweise zum Zusammenwirken des Werkstücks mit dem Schleifwerkzeug an die Werkzeugspindel mittels mindestens eines Antriebs heranfahrbar ist. Des weiteren betrifft die Erfindung ein Verfahren zum Betreiben einer solchen Verzahnungs- oder Profilschleifmaschine.

Insbesondere bei der Herstellung von Zahnrädern kommt dem abschließenden Schleifprozess eine wichtige Bedeutung zu. Bei diesem werden die Zahnflanken einer Schleifoperation unterzogen, mit der sie auf die genaue Kontur gebracht werden. Eine effiziente Verfahrensweise bei der Herstellung der Verzahnung ist das Wälzschleifen mit einer Schleifschnecke oder das Profilschleifen mit einer Profilschleifscheibe.

Bei Werkstücken insbesondere mit kleinen Verzahnungen (Kopfkreisdurchmesser bis ca. 200 mm) ist die Prozess-Hauptzeit im Verhältnis zu den Nebenzeiten relativ kurz. Aufgrund der relativ niedrigen Hauptzeit werden zum Erzielen eines wirtschaftlichen Fertigungsprozesses Maschinen und Schleifverfahren benötigt, die mit einem verbesserten Verhältnis zwischen Hauptzeit zu Nebenzeit aufwarten. Dies gilt insbesondere dann, wenn zusätzlich auch die Werkstück-Losgrößen - als Folge einer zunehmenden Bauteil-Variantenvielfalt - sinken. Damit kommt der Reduzierung der Rüstzeit eine immer größere Bedeutung zu.

Eine Verzahnungsschleifmaschine nach dem Oberbegriff des Anspruchs 1 sowie ein Verfahren zum Betreiben derselben sind aus der EP 2 305 409 B1 bekannt. Hier ist bereits eine Lösung beschrieben, die sich dadurch auszeichnet, dass ein günstiges Verhältnis zwischen Bearbeitungs-Haupt- und -Nebenzeiten erreicht werden kann. Demgemäß ist eine wirtschaftlich vorteilhafte Fertigung möglich. Auch kann der Rüstanteil im Verhältnis zu den Bearbeitungs-Hauptzeiten gering gehalten werden. Eine ähnliche Lösung unter Verwendung zweier Werkstückspindeln, die wechselweise zum Einsatz kommen, offenbart die DE 199 20 323 A1.

Nachteilig ist bei einer solchen Verzahnungsschleifmaschine mit "Pick-Up-Konzept" allerdings, dass bei größer werdenden Durchmessern der zu bearbeitenden Zahnräder (insbesondere bei Durchmessern ab 125 mm) die Massenkräfte bei der Handhabung der Werkstücke so groß werden, dass die benötigte Präzision der Positionierung leidet und das benötigte Qualitätsniveau ohne aufwändige Maßnahmen nicht mehr sichergestellt werden kann. Demgemäß wird zumeist bei Maschinen mit der Bauform gemäß der EP 2 305 409 B2 beim Verzahnungsschleifen die prozesssicher bearbeitbare Werkstückgröße auf maximal 125 mm Durchmesser begrenzt. Darüber hinausgehende Werkstückdimensionen prozesssicher zu bearbeiten, ist aufgrund der konzeptbedingten Schwingungsanfälligkeiten schwierig.

Die US 2 696 763 A zeigt eine Werkzeugmaschine, die mit einem Gegengewicht ausgestattet ist, das das Gewicht eines Arbeitskopfes ausgleichen soll; das Gegengewicht wird dabei über Seilscheiben und Seilzüge bewegt. Die US 2 208 804 A offenbart eine Fräsmaschine, die mit einem System zur Elimination von Spiel in einem Antrieb für einen Wälzfräser versehen ist, wobei wiederum ein Gegengewicht eingesetzt wird.

Der Erfindung liegt daher die **Aufgabe** zugrunde, eine Maschine der eingangs genannten Art sowie ein entsprechendes Verfahren zu deren Betrieb so fortzubilden, so dass eine Überwindung der konzeptbedingten schwingungskritischen Beschränkungen der Bauform der Maschine möglich wird. Angestrebt wird dabei, den bislang möglichen Durchmesser der Werkstücke zumindest zu verdoppeln und die Masse der Werkstücke bei prozesssicherer Bearbeitung zu vervierfachen.

Die **Lösung** dieser Aufgabe durch die Erfindung ist vorrichtungsgemäß dadurch gekennzeichnet, dass am oder im Trägerelement mindestens eine Masse angeordnet ist, die an oder auf einem Führungselement mittels eines Antriebselements beweglich angeordnet ist, wobei die Masse ständig frei von Kontakt mit einem anderen Maschinen- und/oder Werkstück- und/oder Werkzeugteil ist, wobei die Masse zur gleichzeitigen Bewegung in eine zweite Richtung mittels des Antriebselements ausgebildet ist, wenn die Werkstückspindel in eine erste Richtung bewegt wird, wobei die erste Richtung und die zweite Richtung senkrecht zueinander angeordnet sind.

Die Masse ist dabei bevorzugt linearverschieblich an oder auf dem Führungselement angeordnet. Das Führungselement ist bevorzugt als Linearführung ausgebildet. Das Antriebselement ist bevorzugt als ServoMotor ausgebildet. Die genannte Masse wirkt somit als Bauteil, wobei ausschließlich deren Massenkräfte erfindungsgemäß genutzt werden; eine Verbindung der Masse mit einem anderen Bauteil der Maschine - abgesehen vom besagten Führungselement - liegt nicht vor.

Nach einer bevorzugten Ausgestaltung der Erfindung sind zwei Werkstückspindeln an einem Trägerelement angeordnet. Das Trägerelement kann dabei als sich vertikal erstreckender Turm ausgebildet sein. Das Trägerelement ist dabei bevorzugt um die Vertikale drehbar angeordnet. Die mindestens eine Masse kann dabei in horizontale Richtung an oder auf dem Führungselement verschieblich angeordnet sein.

Das Verfahren zum Betreiben einer Verzahnungs- oder Profilschleifmaschine zeichnet sich erfindungsgemäß dadurch aus, dass simultan mit der Verschiebung der Werkstückspindel an oder auf dem Trägerelement mittels eines Antriebselements mindestens eine Masse an oder auf einem Führungselement verschoben wird, wobei die Masse ständig frei von Kontakt mit einem anderen Maschinen- und/oder Werkstück- und/oder Werkzeugteil ist, wobei die Masse in eine zweite Richtung bewegt wird, wenn die Werkstückspindel in die Verschieberichtung bewegt wird und wobei die Verschieberichtung und die zweite Richtung senkrecht zueinander angeordnet sind.

Bevorzugt erfolgt dabei eine Verschiebung der Werkstückspindel in vertikale Richtung und eine Verschiebung der Masse in horizontale Richtung.

Die Erfindung stellt insoweit auf eine Verzahnungsschleifmaschine mit "Pick-Up-Konzept" für Werkstücke mit bis zu 250 mm Durchmesser ab, bei dem bevorzugt zwei Werkstückspindeln in einem 180°-Winkel zueinander vertikal beweglich an einem Schwenkturm angebracht sind. Die durch die hohe Dynamik der "Pick-Up-Spindeln" (d. h. bei der Bewegung der Werkstückspindeln in Vertikalrichtung) auftretenden Massenkräfte werden somit mit Hilfe einer im Schwenkturm integrierten separaten Masse ("seismische Masse") kompensiert.

Dadurch bleibt eine negative Auswirkung auf das Schleifergebnis aus. Eine entsprechende Ansteuerung und Auslegung der Masse gewährleistet, dass keine Einschränkung der Vertikalachse hinsichtlich ihrer Dynamik getroffen werden muss.

Die vorgeschlagene erfindungsgemäße Ausgestaltung erlaubt es, problemlos Werkstückdurchmesser bis zu 250 mm und mehr durch das bevorzugte "Pick-Up-Maschinenkonzept" zu bearbeiten, d. h. ausgehend von den bislang gebräuchlichen 125 mm Werkstückdurchmesser kann eine Verdopplung des Durchmessers realisiert werden. Somit kann in energieeffizienter Weise eine zusätzliche Produktionskapazität gewonnen werden. Insgesamt verbessert sich die Wirtschaftlichkeit des Verzahnungsschleifprozesses entsprechend.

Bevorzugt werden zwei "Pick-Up"-Werkstückspindeln an einer einzigen Säule angebracht, wobei die Werkstückspindeln sich gegenüberliegend montiert sind. Auf einer dritten Position kann ein Abrichter zum Abrichten des Schleifwerkzeugs vorgesehen werden. Während dann an einer Werkstückspindel Teile bearbeitet werden, wird an der zweiten Spindel das bereits fertig bearbeitete Werkstück beispielsweise auf einem Band abgelegt. Anschließend wird ein neues Teil von der Pick-Up-Spindel vom Band entnommen, gespannt und ausgerichtet. Ist das Teil an der ersten Werkstückspindel fertig bearbeitet, dreht die Säule um 180° um die Vertikalachse und bringt damit das nächste Werkstück in den Arbeitsraum zur Bearbeitung.

Generell führt dabei die im Schwenkturm integrierte Masse ("seismische Masse") während der Bewegung der Pick-Up-Spindel auf der Be- und Entladeseite eine Kompensationsbewegung (Gegenbewegung) aus, um die auftretenden Massenkräfte zu kompensieren.

Das Konzept sieht bevorzugt eine integrierte Ablage mit bis zu drei Speichern zum Ausschleusen von NIO/SPC-Teilen vor. Diese Ablage ist weiterhin für den automatisierten Spannmittelwechsel vorgesehen.

Die vorgeschlagene Maschine ist insbesondere für Anwendungen im Automobil- und Maschinenbau vorteilhaft einsetzbar. Hier seien als Beispiele Pkw-Getriebe (manuelle Getriebe, Stufenautomaten, Doppelkupplungsgetriebe), Bauteile von Planetengetrieben (bevorzugt Durchmesser von 30 bis 60 mm) und Schalträder (bevorzugt 50 bis 160 mm) sowie Achsantriebsrädern (bevorzugt 170 bis 250 mm) genannt. Gleichermaßen seien Lkw-Getriebe sowie Industriegetriebe genannt.

Im Bereich der Werkzeugspindel kann ein Gegenhalter ortsfest auf oder an einem Maschinenbett angeordnet sein. Dieser Gegenhalter kann von beiden Werkstückspindeln genutzt werden. Vorgesehen werden können auch weitere Peripheriegeräte: An einer Stelle kann ein Ausrichtgerät für das Werkstück ortsfest auf oder an dem Maschinenbett angeordnet sein.

Am Trägerelement (Turm) kann ferner ein Abrichtgerät für das Schleifwerkzeug angeordnet sein; damit kann bei Bedarf das Schleifwerkzeug abgerichtet werden.

An einer anderen Stelle kann weiterhin eine Schleuderstation für das Werkstück ortsfest auf oder an dem Maschinenbett angeordnet sein.

An einer weiteren Stelle kann eine Spannmittel-Wechselstation ortsfest auf oder an dem Maschinenbett angeordnet sein. Weiterhin kann eine Station zur Ablage eines Werkstücks auf oder an dem Maschinenbett angeordnet sein. Eine bevorzugte Ausgestaltung sieht dabei vor, dass die Spannmittel-Wechselstation bzw. die Station zur Ablage eines Werkstücks einen Rundschalttisch mit mindestens zwei Ablageplätzen aufweist. Die Spannmittel-Wechselstation und die Station zur Ablage eines Werkstücks sind dabei bevorzugt als kombinierte Einheit ausgebildet.

Im Bereich der Werkzeugspindel kann schließlich eine Schleifwerkzeug-Wechselstation ortsfest auf oder an dem Maschinenbett angeordnet sein.

Vorteilhaft können mit dem vorgeschlagenen Konzept die Nebenzeit optimiert (minimiert) und Rüstprozesse und Automatisierungsfunktionalitäten integriert werden. Das Be- und Entladen der Werkstückspindeln mit Werkstücken, das Spannen, das Ausrichten (Einmitten) der Verzahnung, das Beschleunigen und Abbremsen sowie das Schleudern der Werkstücke können parallel zum Schleifen auf der anderen Werkstückspindel realisiert werden. Demgemäß ermöglicht das vorgeschlagene Konzept auch eine wesentliche Verbesserung bezüglich der Nebenzeiten.

In der Zeichnung ist ein Ausführungsbeispiel der Erfindung dargestellt. Es zeigen:
- Fig. 1: in perspektivischer Ansicht eine Verzahnungsschleifmaschine mit einem Trägerelement in Form eines sich vertikal erstreckenden Turms, an dem zwei Werkstückspindeln angeordnet sind, um Werkstücke von einer Be- und Entladestation zu einer Schleifposition und zurück zu bewegen,
- Fig. 2: die zu Fig. 1 zugehörige Vorderansicht.

In den Figuren ist eine Verzahnungsschleifmaschine 1 zu sehen, die ein Maschinenbett 11 aufweist. Auf dem Maschinenbett 11 sind zunächst die üblichen Elemente angeordnet, um eine Verzahnungsschleifoperation vornehmen zu können. Demgemäß hat die Maschine 1 insbesondere eine an einem Werkzeugträger angeordnete Werkzeugspindel 3 mit einem Schleifwerkzeug 4 (Schleifscheibe oder Schleifschnecke, gegebenenfalls auch in Achsrichtung versetzt mehrere Schleifwerkzeuge, beispielsweise für das Schruppen und Schlichten), das auf einer entsprechenden beweglichen Führung so angeordnet ist, dass es die für den Schleifvorgang benötigten Bewegungen ausführen kann. In den Figuren sind mit Doppelpfeilen die vorgesehenen Bewegungsrichtungen angegeben, nämlich X, Y, Z, A, B. Auf diese wird allerdings nicht näher eingegangen, da es sich dabei um übliche Achsen handelt.

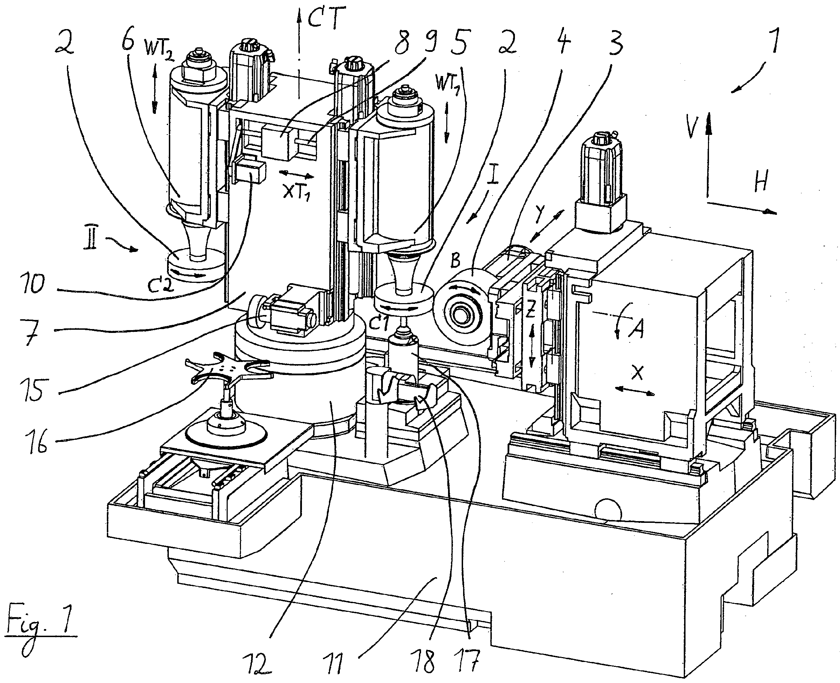

Ferner sind bei der Verzahnungsschleifmaschine 1 zwei Werkstückspindeln 5 und 6 vorgesehen sind, die jeweils zur Aufnahme eines Werkstücks 2 ausgebildet sind (s. Drehachsen C1 und C2 in Fig. 1). Diese beiden Werkstückspindeln 5, 6 sind an einem Trägerelement 7 in Form eines Turms so angeordnet, dass sie um eine vertikale Achse, nämlich um die Schwenkachse CT, verschwenkt werden können. Beim Verschwenken um die Achse CT kann ein auf einer der Werkstückspindeln 5, 6 gespanntes Werkstück 2 von einer Schleifposition I zu einer Beladeposition II bzw. umgekehrt von der Position II zu der Position I bewegt werden.

In der Beladeposition II kann ein Werkstück 2 mittels einer nicht dargestellten Werkstückbereitstellung be- bzw. entladen werden. Die Werkstücke 2 können dabei beispielsweise mit einem Band an- bzw. abtransportiert werden. Natürlich ist genauso jede andere Art der Bereitstellung bzw. des Abtransports von Werkstücken 2 möglich, z. B. eine Beladezelle.

Zur Positionierung des Werkstücks 2 in Höhenrichtung, d. h. in Richtung der Vertikalen V, bewegt sich die Werkstückspindel 5, 6 in Richtung WT₁ bzw. WT₂. Wenn das Werkstück 2 eine entsprechend große Masse aufweist, hat dies zur Folge, dass erhebliche Massenkräfte bei einer schnellen Verfahrbewegung in Richtung WT₁ bzw. WT₂ entstehen. Um dies zu verhindern bzw. um dem entgegen zu wirken, ist vorgesehen, dass am bzw. im Trägerelement 7 eine Masse 8 angeordnet ist, die auf einem Führungselement 9 mittels eines Antriebselements 10 beweglich angeordnet ist. Die Bewegungsrichtung der Masse 8 ist in Fig. 1 mit XT₁ angegeben. Das Führungselement 9 ist vorliegend als Schraubspindel ausgebildet. In der Masse 8 ist eine korrespondierende (nicht dargestellte) Mutter angeordnet, die mit der Schraubspindel zusammenwirkt. Demgemäß bewegt sich die Masse 8 bei der Drehung der Schraubspindel translatorisch, wobei besagte Drehung durch das Antriebselement 10 in Form eines Servomotors bewerkstelligt wird.

Die Masse 8 ist dabei ständig frei von Kontakt mit einem anderen Maschinen-und/oder Werkstück- und/oder Werkzeugteil. Die Masse 8 wirkt vielmehr als Körper (d. h. als seismische Masse), der nur durch seine Massenkräfte (weitergeleitet über das Führungselement 9 auf den Turm 7) auf das System wirkt und - bei entsprechender Ansteuerung des Antriebselements 10 - der Massenkraft ausgleichend wirkt, die durch die Werkstückspindel 5, 6 erzeugt wird.

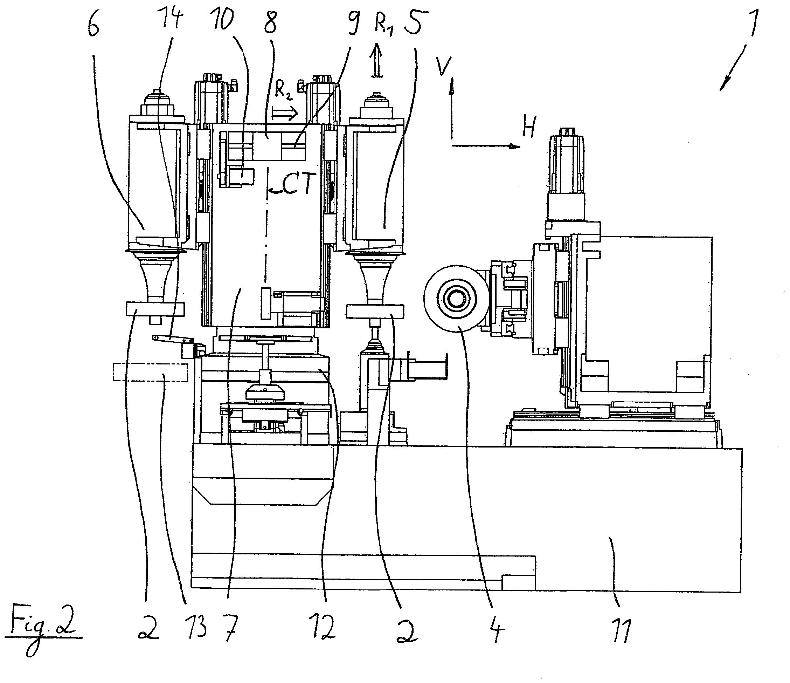

Wird also - s. hierzu Fig. 2 - die Werkstückspindel 5 in Richtung R₁ verfahren, kann die Masse 8 gezielt und simultan in Richtung R₂ bewegt werden, so dass sich bezogen auf den Basispunkt, an dem der Turm 7 auf dem Maschinenbett 11 steht, ein ausgleichendes Drehmoment in Folge der Massenkraft der Masse 8 ergibt und insgesamt dem Turm einen stabileren Stand verleiht. Wie in Fig. 2 zu sehen ist, wird in diesem speziellen Fall also besagter Ausgleich durch die Massenkräfte der Masse 8 erzeugt, indem der Bewegung der Werkstückspindel 5 in vertikale Richtung V eine Bewegung der Masse 8 in horizontale Richtung H entgegengesetzt wird.

Der Turm 7 ist vorliegend auf einem Rundtisch 12 angeordnet. Neben der Maschine ist der Be- und Entladebereich 13 angeordnet. Weiter zu erwähnen ist eine Ausrichteinheit 14, eine Abrichteinheit 15, eine Spannmittel-Wechselstation 16 (SPC (Messteile) / NIO (Ausschussteile) - Ablage), ein Reitstock 17 und eine Schleifwerkzeug-Wechselstation 18.

Zur Ausrichteinheit 14 sei folgendes angemerkt: Die Einheit umfasst im Ausführungsbeispiel einen rüstfreien Ausrichtsensor, der bevorzugt (mindestens) eine NC-Achse aufweist, mittels derer er (mindestens) eine Linearbewegung ausführen kann.

### Bezugszeichenliste:

- 1: Verzahnungs- oder Profilschleifmaschine
- 2: Werkstück
- 3: Werkzeugspindel
- 4: Schleifwerkzeug
- 5: Werkstückspindel
- 6: Werkstückspindel
- 7: Trägerelement (Turm)
- 8: Masse
- 9: Führungselement (Linearführung)
- 10: Antriebselement (Servomotor)
- 11: Maschinenbett
- 12: Rundtisch
- 13: Be- und Entladebereich
- 14: Ausrichteinheit
- 15: Abrichteinheit
- 16: Spannmittel-Wechselstation
- 17: Reitstock
- 18: Schleifwerkzeug-Wechselstation
- V: Vertikale
- H: Horizontale
- CT: Schwenkachse
- I: Schleifposition
- II: Beladeposition

## Patentansprüche

1. Verzahnungs- oder Profilschleifmaschine (1), insbesondere zum Schleifen vorverzahnter bzw. vorprofilierter Werkstücke (2), wobei die Maschine mindestens eine Werkzeugspindel (3) aufweist, auf der mindestens ein Schleifwerkzeug (4) aufgenommen werden kann, und wobei die Maschine mindestens eine Werkstückspindel (5, 6) aufweist, die an einem Trägerelement (7) verschieblich angeordnet ist und die zumindest zeitweise zum Zusammenwirken des Werkstücks (2) mit dem Schleifwerkzeug (4) an die Werkzeugspindel (3) mittels mindestens eines Antriebs heranfahrbar ist,
**dadurch gekennzeichnet,**
**dass** am oder im Trägerelement (7) mindestens eine Masse (8) angeordnet ist, die an oder auf einem Führungselement (9) mittels eines Antriebselements (10) beweglich angeordnet ist, wobei die Masse (8) ständig frei von Kontakt mit einem anderen Maschinen- und/oder Werkstück- und/oder Werkzeugteil ist, wobei die Masse (8) zur gleichzeitigen Bewegung in eine zweite Richtung (R2) mittels des Antriebselements (10) ausgebildet ist, wenn die Werkstückspindel (5, 6) in eine erste Richtung (R1) bewegt wird, wobei die erste Richtung (R1) und die zweite Richtung (R2) senkrecht zueinander angeordnet sind.

2. Verzahnungs- oder Profilschleifmaschine nach Anspruch 1, **dadurch gekennzeichnet, dass** die Masse (8) linearverschieblich an oder auf dem Führungselement (9) angeordnet ist.

3. Verzahnungs- oder Profilschleifmaschine nach Anspruch 1 oder 2, **dadurch gekennzeichnet, dass** das Führungselement (9) als Linearführung ausgebildet ist.

4. Verzahnungs- oder Profilschleifmaschine nach einem der Ansprüche 1 bis 3, **dadurch gekennzeichnet, dass** das Antriebselements (10) als ServoMotor ausgebildet ist.

5. Verzahnungs- oder Profilschleifmaschine nach einem der Ansprüche 1 bis 4, **dadurch gekennzeichnet, dass** zwei Werkstückspindeln (5, 6) an einem Trägerelement (7) angeordnet sind.

6. Verzahnungs- oder Profilschleifmaschine nach Anspruch 5, **dadurch gekennzeichnet, dass** das Trägerelement (7) als sich vertikal (V) erstreckender Turm ausgebildet ist.

7. Verzahnungs- oder Profilschleifmaschine nach Anspruch 6, **dadurch gekennzeichnet, dass** das Trägerelement (7) um die Vertikale (V) drehbar angeordnet ist.

8. Verzahnungs- oder Profilschleifmaschine nach einem der Ansprüche 5 bis 7, **dadurch gekennzeichnet, dass** die mindestens eine Masse (8) in horizontale Richtung (H) an oder auf dem Führungselement (9) verschieblich angeordnet ist.

9. Verfahren zum Betreiben einer Verzahnungs- oder Profilschleifmaschine (1) nach einem der Ansprüche 1 bis 8, bei dem mindestens eine Werkstückspindel (5, 6) an oder auf einem Trägerelement (7) in eine Verschieberichtung (WT₁, WT₂) verschoben wird,
**dadurch gekennzeichnet, dass**
simultan mit der Verschiebung der Werkstückspindel (5, 6) an oder auf dem Trägerelement (7) mittels eines Antriebselements (10) mindestens eine Masse (8) an oder auf einem Führungselement (9) verschoben wird, wobei die Masse (8) ständig frei von Kontakt mit einem anderen Maschinen- und/oder Werkstück- und/oder Werkzeugteil ist, wobei die Masse (8) in eine zweite Richtung (R2) bewegt wird, wenn die Werkstückspindel (5, 6) in die Verschieberichtung (WT₁, WT₂) bewegt wird und wobei die Verschieberichtung (WT₁, WT₂) und die zweite Richtung (R2) senkrecht zueinander angeordnet sind.

10. Verfahren nach Anspruch 9, **dadurch gekennzeichnet, dass** die Verschiebung der Werkstückspindel (5, 6) in vertikale Richtung (V) erfolgt und die Verschiebung der Masse (8) in horizontale Richtung (H) erfolgt.

## Claims

1. Gear or profile grinding machine (1), in particular for grinding pre-toothed or pre-profiled workpieces (2), wherein the machine has at least one tool spindle (3) on which at least one grinding tool (4) can be mounted, and wherein the machine has at least one workpiece spindle (5, 6) which is arranged displaceably on a carrier element (7) and which can be moved at least temporarily towards the tool spindle (3) by means of at least one drive in order for the workpiece (2) to interact with the grinding tool (4),
**characterized in**
**that** at least one mass (8) is arranged on or in the carrier element (7), which mass (8) is arranged movably at or on a guide element (9) by means of a drive element (10), wherein the mass (8) is constantly free from contact with another machine part and/or workpiece part and/or tool part, wherein the mass (8) is designed for simultaneous movement in a second direction (R2) by means of the drive element (10) when the workpiece spindle (5, 6) is moved in a first direction (R1), wherein the first direction (R1) and the second direction (R2) are arranged perpendicular to each other.

2. Gear or profile grinding machine according to claim 1, **characterized in that** the mass (8) is arranged linearly displaceably at or on the guide element (9).

3. Gear or profile grinding machine according to claim 1 or 2, **characterized in that** the guide element (9) is designed as a linear guide.

4. Gear or profile grinding machine according to one of claims 1 to 3, **characterized in that** the drive element (10) is designed as a servo motor.

5. Gear or profile grinding machine according to one of claims 1 to 4, **characterized in that** two workpiece spindles (5, 6) are arranged on a carrier element (7).

6. Gear or profile grinding machine according to claim 5, **characterized in that** the carrier element (7) is designed as a vertically (V) extending tower.

7. Gear or profile grinding machine according to claim 6, **characterized in that** the carrier element (7) is arranged rotatably about the vertical (V).

8. Gear or profile grinding machine according to one of claims 5 to 7, **characterized in that** the at least one mass (8) is arranged displaceably in the horizontal direction (H) at or on the guide element (9).

9. Method for operating a gear or profile grinding machine (1) according to one of claims 1 to 8, in which at least one workpiece spindle (5, 6) is displaced in a displacement direction (WT1, WT2) at or on a carrier element (7),
**characterized in that**
simultaneously with the displacement of the workpiece spindle (5, 6) at or on the carrier element (7), at least one mass (8) is displaced at or on a guide element (9) by means of a drive element (10), wherein the mass (8) is constantly free from contact with another machine part and/or workpiece part and/or tool part, wherein the mass (8) is moved in a second direction (R2) when the workpiece spindle (5, 6) is moved in the displacement direction (WT₁, WT₂) and wherein the displacement direction (WT₁, WT₂) and the second direction (R2) are arranged perpendicular to each other.

10. Method according to claim 9, **characterized in that** the displacement of the workpiece spindle (5, 6) takes place in vertical direction (V) and the displacement of the mass (8) takes place in horizontal direction (H).

## Revendications

1. Machine de rectification de dentures ou de profilés (1), notamment pour rectifier des pièces pré-dentées ou pré-profilées (2), la machine présentant au moins une broche d'outil (3) sur laquelle peut être reçu au moins un outil de rectification (4), et la machine présentant au moins une broche de pièce (5, 6), qui est agencée de manière mobile sur un élément de support (7) et qui peut être approchée de la broche d'outil (3) au moyen d'au moins un entraînement, au moins temporairement, pour la coopération de la pièce (2) avec l'outil de rectification (4),
**caractérisée en ce que**
au moins une masse (8) est agencée sur ou dans l'élément de support (7), laquelle est agencée de manière mobile au niveau de ou sur un élément de guidage (9) au moyen d'un élément d'entraînement (10), la masse (8) étant toujours exempte de contact avec une autre partie de la machine et/ou de la pièce et/ou de l'outil, la masse (8) étant configurée pour se déplacer simultanément dans une deuxième direction (R2) au moyen de l'élément d'entraînement (10) lorsque la broche de pièce (5, 6) est déplacée dans une première direction (R1), la première direction (R1) et la deuxième direction (R2) étant agencées perpendiculairement l'une à l'autre.

2. Machine de rectification de dentures ou de profilés selon la revendication 1, **caractérisée en ce que** la masse (8) est agencée de manière mobile linéairement au niveau de ou sur l'élément de guidage (9).

3. Machine de rectification de dentures ou de profilés selon la revendication 1 ou 2, **caractérisée en ce que** l'élément de guidage (9) est configuré sous forme de guidage linéaire.

4. Machine de rectification de dentures ou de profilés selon l'une quelconque des revendications 1 à 3, **caractérisée en ce que** l'élément d'entraînement (10) est configuré sous forme de servomoteur.

5. Machine de rectification de dentures ou de profilés selon l'une quelconque des revendications 1 à 4, **caractérisée en ce que** deux broches de pièce (5, 6) sont agencées sur un élément de support (7).

6. Machine de rectification de dentures ou de profilés selon la revendication 5, **caractérisée en ce que** l'élément de support (7) est configuré sous forme de tour s'étendant verticalement (V).

7. Machine de rectification de dentures ou de profilés selon la revendication 6, **caractérisée en ce que** l'élément de support (7) est agencé de manière rotative autour de la verticale (V).

8. Machine de rectification de dentures ou de profilés selon l'une quelconque des revendications 5 à 7, **caractérisée en ce que** l'au moins une masse (8) est agencée de manière mobile dans la direction horizontale (H) au niveau de ou sur l'élément de guidage (9).

9. Procédé d'exploitation d'une machine de rectification de dentures ou de profilés (1) selon l'une quelconque des revendications 1 à 8, dans lequel au moins une broche de pièce (5, 6) est déplacée au niveau de ou sur un élément de support (7) dans une direction de déplacement (WT₁, WT₂),
**caractérisé en ce que**
simultanément avec le déplacement de la broche de pièce (5, 6) au niveau de ou sur l'élément de support (7), au moins une masse (8) est déplacée au niveau de ou sur un élément de guidage (9) au moyen d'un élément d'entraînement (10), la masse (8) étant toujours exempte de contact avec une autre partie de la machine et/ou de la pièce et/ou de l'outil, la masse (8) étant déplacée dans une deuxième direction (R2) lorsque la broche de pièce (5, 6) est déplacée dans la direction de déplacement (WT₁, WT₂), et la direction de déplacement (WT₁, WT₂) et la deuxième direction (R2) étant agencées perpendiculairement l'une à l'autre.

10. Procédé selon la revendication 9, **caractérisé en ce que** le déplacement de la broche de pièce (5, 6) est effectué dans la direction verticale (V) et le déplacement de la masse (8) est effectué dans la direction horizontale (H).
